# EUROPEAN PATENT APPLICATION

(11) **EP 3 878 543 A1**
(43) Date of publication of application: **15.09.2021**
(21) Application number: 21160606.6
(22) Date of filing: 04.03.2021
(51) Int. Cl.: B01D 61/14

(54) **FILTER MEMBRANES AS ANTIFOAM LEVEL SAFEGUARDS**

(30) Priority: 11.03.2020 EP 20162273
(71) Applicant: Bayer AG, 51373 Leverkusen (DE)
(72) Inventor: BUYEL, Joschka, Johannes, 50679 Köln (DE); Claßen, Sven, 53894 Mechernich (DE)
(74) Representative: BIP Patents

(57) **Abstract**

What is disclosed herein relates to the use of at least one filter membrane as detector of simethicone level.

## Description

In biotechnological processes antifoam agents are often used to prevent foam building and decrease shear stress of cells. Silicone based antifoam agents such as Antifoam C, ExCell Antifoam or FoamAway are complex emulsions typically comprising around 3% w/w in working solution simethicone. Currently, no toxicological limit is known for *intra venous* (*i.v.*) or *subcutaneous* (*s.c.*) administration of simethicone and antifoam agents. Because of that, antifoam agents are considered a process-related impurity and hence fall within the ICH Q3A(R2) regulations *inter alia* of the European Medical Agency. Hence there is a need to demonstrate sufficient simethicone depletion in biotechnological processes.

This need can be met using a method for determining whether the simethicone level in a biotechnological process is depleted below a desired simethicone level comprising the following steps:
- providing a product stream
- passing said product stream through at least one filter membrane with a pore size of between 0,1 µm and 0,3 µm
- detecting whether the at least one filter membrane blocks via monitoring whether a pressure required to keep the process stream moving increases or decreases and/or via monitoring whether the flow rate passing said product stream through the at least one filter membrane declines to 0 mL/min
characterized in that the at least one filter membrane blocks if the level of simethicone is above a certain threshold wherein said threshold is below the desired simethicone level.

The threshold at which the at least one filter membrane blocks is below the desired simethicone level i.e. it is below the level that is considered a process related impurity according to ICH Q3A(R2) that needs to be identified.

It was surprisingly discovered that sufficient simethicone and hence antifoam depletion can be reliably demonstrated by the incorporation of at least one filter membrane in the production process that blocks at a certain simethicone concentration (pressure at physical pressure limit of material). Hence, as the filter membrane was found to block at simethicone concentrations far below the tolerable simethicone level, in turn if the filter did not block the simethicone - and hence antifoam levels - have to be even lower. In other words, it is guaranteed that simethicone - and hence antifoam - is sufficiently depleted. Therefore, via using the filter membrane to ensure that simethicone depletion is sufficient no time consuming spiking studies may need to be performed and validated at manufacturing scale leading to a faster and cheaper process development and approval. In other words, the method described herein renders extensive studies - so far required to comply with impurity regulations - demonstrating impurity removal of simethicone at small and large scale unnecessary since the filter membrane acts as safeguard ensuring simethicone levels below the required values.

As used herein the term "filter membrane" is used synonymously with the term "filter" and refers to a sterile filter with a polyvinylidene fluoride (polyvinylidene difluoride, PVDF) membrane and a pore size between 0,1 µm and 0,3 µm preferably between 0,2 µm and 0,22 µm.

Examples of suitable PVDF filter membranes are Durapore KVGL Sterile Filter, Hydrophilic modified PVDF, Durapore® 0.22 µm Optiscale or Mini Kleenpak KM5DFLP2S. A person skilled in the art is aware that any sterile PVDF filter with the given pore size can be used in a similar fashion.

As used herein the term "detector" refers to the fact that the filter membrane indicates - i.e. blocks - if the level of simethicone is above a certain threshold wherein said threshold is below the desired simethicone level.

As used herein the term "product stream" refers to a cell-free fluid from a heterogeneous cell culture fluid mixture that comprises a protein of interest or its isolated fractions thereof, like concentrates, dilutions of eluates etc. For the sake of clarity, the product stream is also a "fluid stream" or "fluid flow" in the sense of this description.

The monitoring can for example be carried out via optical inspection of the at least one filter membrane e.g. an operator monitors the tube connected to the at least one filter membrane for irregularities such as bulges or no apparent flow.

To a person skilled in the art it is clear that the process stream has a certain flow rate of above 0 mL/min with which it passes the at least one filter membrane under normal circumstances i.e. as long as the at least one filter membrane is not blocked. This flow rate can be pre-determined e.g. via a process control system or can vary e.g. depending on other factors such as a flow rate of a unit operation of the biotechnological process. A typical flow rate of a biotechnological production process is a flow rate of between 2 L/min and 350 L/min depending on the product and the quantities that need to be produced.

A skilled person knows how to set an upper and a lower limit for the values of the pressure required to keep the process stream moving in order to monitor whether said pressure increases or decreases. For example if the pressure required to keep the process stream moving at the desired flow rate is 1 bar the skilled person can easily define an upper or lower limit for this value e.g. 0,9 and 1,1 bar for example via experiments or based on the manufacturers maximum recommended pressure for the respective filter membrane. If a pressure below or above said value is detected it is determined that an increase or decrease exists.

Preferably the pressure required to keep the process stream moving at the desired flow rate is between 0,1 bar and 4,5 bar, more preferably between 0,3 and 3,0 bar and most preferably between 0,5 and 2,0 bar.

In one embodiment of the method described herein it is monitored whether a pressure required to keep the process stream moving increases until the manufacturers maximum recommended pressure for the at least one filter membrane is reached.

In one embodiment of the method described herein the monitoring is carried out using at least one pressure sensor in front of the at least one filter membrane and/or at least one pressure sensor located behind the at least one filter membrane.

In a preferred embodiment of the method described herein the monitoring is carried out via a process control system which detects a deviation in the pressure required to pass said product stream through the at least one filter membrane via analyzing data generated by at least one pressure sensor located in front of the at least one filter membrane and/or at least one pressure sensor located behind the at least one filter membrane.

In case of a pressure sensor located in front of the at least one filter membrane the at least one pressure sensor will detect a pressure increase in case the at least one filter membrane blocks. Likewise, in case of a pressure sensor located behind the at least one filter membrane said at least one pressure sensor will detect a pressure decrease in case the at least one filter membrane blocks.

Examples for suitable pressure sensors are
- Absolute pressure sensors, measures the pressure relative to perfect vacuum.
- Gauge pressure sensors, which measures the pressure relative to atmospheric pressure.
- Sealed pressure sensors, which measure pressure relative to some fixed pressure rather than the ambient atmospheric pressure (which varies according to the location and the weather).

Apart from these categories to a skilled person it is clear that for example a gauge or a sealed pressure sensor can also be termed differential pressure sensors as they measure the difference between two pressures - one on each side of the sensor. Differential pressure sensors can be used to measure many properties, such as pressure drops across filter membranes, fluid levels (by comparing the pressure above and below the liquid) or flow rates (by measuring the change in pressure across a restriction). Thus a gauge pressure sensor is also a differential pressure sensor in which one side is open to the ambient atmosphere.

In an exemplary case of using at least one pressure sensor the pressure sensor is a pressure gauge comprised in a pump or a chromatography skid.

An example of a suitable pressure sensor is a Pendotech single use pressure gauge.

In another embodiment of the method described herein the monitoring is carried out using at least one flow sensor located before and/or behind the at least one filter membrane.

In a preferred embodiment of the method described herein the monitoring is carried out via a process control system which detects a deviation in the flow rate with which the product stream passes the at least one filter membrane via analyzing data generated by at least one flow sensor located before and/or behind the at least one filter membrane.

An example for a suitable flow sensor is the flow sensor comprised in the Akta ready system.

To a skilled person it is clear that the different ways of monitoring whether a pressure required to keep the process stream moving increases or decreases and/or via monitoring whether the flow rate passing said product stream through the at least one filter membrane declines to 0 mL/min can be combined i.e. any combination of at least one pressure sensor and/or at least one flow sensor and/or optical inspection can be employed.

In an exemplary biotechnological process in which the method described herein is employed at least one flow sensor comprised in at least one pump and/or at least one chromatography skid measures the flow rate of the product stream and/or at least one pressure sensor comprised in at least one pump and/or at least one chromatography skid measures the pressure required to keep the product stream moving. Thus, the respective ways of detecting whether the at least one filter membrane blocks can be monitored at various points in the system e.g. before or after a filter membrane, depending on the individual setup and performed unit operation(s).

In one embodiment of the method described herein the monitoring carried out via the process control system uses at least one of the following two different control mechanisms. In the first control mechanism a flow rate is kept constant until the pressure required to keep the product stream moving which is e.g. monitored by at least one pressure sensor, e.g. a pendotech signle use pressure gauge, comprised in a pump setup or a chromatography skid reaches a pre-determined limit which triggers a flow stop. In the second control mechanism the pressure is monitored by a pressure sensor e.g. comprised in a pump system or chromatography skid such as the Akta ready skid and maintained constant over the at least one filter membrane via a controller e.g. a controller of said pump system or said chromatography skid which regulates the flow rate up or down depending on whether the pressure is increasing or decreasing.

In a preferred embodiment of the method described herein the at least one filter membrane blocks at a simethicone level of between 0.001 mg/L - 10 mg/L, preferably 1.2 mg/L - 5.5 mg/L at production scale. According to attachment 1 of the ICH Q3A(R2) requirements, the relevant identification threshold for simethicone is 0.10 % or 1 mg per day intake (whichever is lower).

A skilled person knows how to determine the allowed simethicone level which is product concentration depended (cf. Table 1 below). In Table 1 the simethicone level was assumed to be at the maximum allowed concertation added to the production bioreactor during manufacturing and was at a constant level of 73.5 mg/L. Hence, with increasing product concentration per L the percentage of simethicone per product decreases in Table 1.

| Table 1 Allowed simethicone levels | | | | |
|---|---|---|---|---|
| Product [mg/L] | Ensured Maximum Simethicone capacity of filter membrane 6&8 [mg/L] | mg Simethico ne/ mg Product [%] | mg Simethicone in 150 mg Product | Allowed Simethicone <0.1% [mg] |
| 1000 | 1.2 | 0.12% | 0.18 | 0.15 |
| 1500 | 1.2 | 0.08% | 0.12 | 0.15 |
| 2000 | 1.2 | 0.06% | 0.09 | 0.15 |
| 3000 | 1.2 | 0.04% | 0.06 | 0.15 |
| 4000 | 1.2 | 0.03% | 0.045 | 0.15 |
| 5000 | 1.2 | 0.02% | 0.036 | 0.15 |
| 6000 | 1.2 | 0.02% | 0.030 | 0.15 |
| 7000 | 1.2 | 0.02% | 0.026 | 0.15 |
| 8000 | 1.2 | 0.02% | 0.023 | 0.15 |
| 9000 | 1.2 | 0.01% | 0.020 | 0.15 |
| 10000 | 1.2 | 0.01% | 0.018 | 0.15 |

| Product [mg/L] | Ensured Maximum Simethicone capacity of filter membrane 3 [mg/L] | mg Simethico ne/ mg Product | mg Simethicone in 150 mg Product | Allowed Simethicone <0.1% [mg] |
|---|---|---|---|---|
| 1000 | 5.5 | 0.55% | 0.825 | 0.15 |
| 1500 | 5.5 | 0.37% | 0.550 | 0.15 |
| 2000 | 5.5 | 0.28% | 0.413 | 0.15 |
| 3000 | 5.5 | 0.18% | 0.275 | 0.15 |
| 4000 | 5.5 | 0.14% | 0.206 | 0.15 |
| 5000 | 5.5 | 0.11% | 0.165 | 0.15 |
| 6000 | 5.5 | 0.09% | 0.138 | 0.15 |
| 7000 | 5.5 | 0.08% | 0.118 | 0.15 |
| 8000 | 5.5 | 0.07% | 0.103 | 0.15 |

Hence Table 1 shows that depending on the Bioreactor supplement of simethicone comprised in antifoam, the bioreactor titer (product) and the desired application dose (in mg) to the patient, the implementation of the filter can guarantee that the process depletes antifoam - and with that - simethicone to a level that is below the ICH Q3A(R2) thresholds. At worst case (assumption: 150 mg applied to patient s.c. independent of body weight). A titer of 1500 mg/L or 6000 mg/L is sufficient for the filter with a capacity of 1.2 mg/L and the filter with a capacity of 5.5 respectively to ensure a concentration of <0.1% mg simethicone/mg Product when used under process conditions.

To a person skilled in the art it is clear that if a filter blocks it is likely due to components such as simethicone and PEG and hence if the filter performs as desired the concentration of these agents need to be below the desired values for all components.

As used herein the expression "filter blocks" refers to the fact that if components accumulate on a filter membrane a process stream cannot pass freely through the filter membrane and hence the pressure required to keep the process stream moving is increased until the manufacturers maximum recommended pressure is reached - e.g. in the case of the exemplary used filter membranes this recommended pressure was 5,5 bar for the Durapore KVGL Sterile Filter, Hydrophilic modified PVDF, Durapore® 0.22 µm and 4,1 bar for the Optiscale or Mini Kleenpak KM5DFLP2S - or the flow through the filter declines to 0 mL/min. In a further embodiment of the method described herein the simethicone is comprised in an antifoam agent. Examples of antifoam agents are antifoam C, FoamAway or ExCell Antifoam or any other DOW Q7-2587, 30% emulsion-based product.

In a further embodiment of the method described herein the simethicone is depleted in a biotechnological process comprising at least one bind-and-elute step, such as a Protein A chromatography, including a sterile filtration, i.e. employing a filter with a pore size of 0.2 µm - 0.22 µm.

Optionally said biotechnological process can of course comprise further process steps e.g. depth filtration, particle filtration employing filters with a pore size of 0.45 µm-3 µm and further sterile filtration steps as well as unit operations such as diafiltration, ultrafiltration, CEX, AEX, MMC, Affinity Chromatography, viral inactivation and homogenization.

In a further aspect, what is described herein relates to the use of the method described herein wherein a product stream comprising simethicone and a biotechnological product is passed through the filter membrane.

### Figure

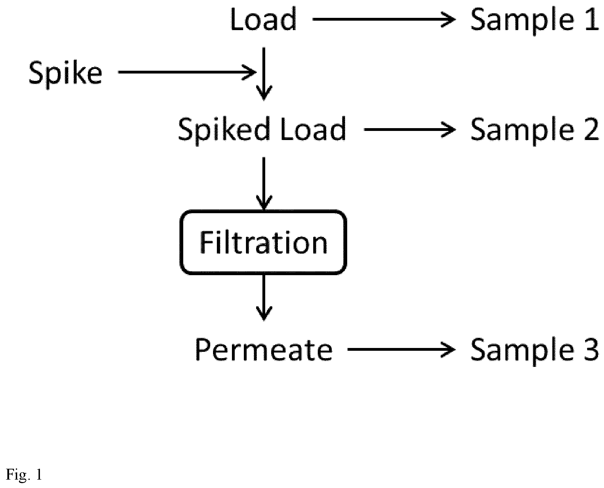

The Figure depicts a scheme for Sample Collection

### Example

A simethicone - and hence antifoam - depletion study was performed using different filters as detailed below and ultimately testing the filters as detailed in Table 2.

**Table 2. Filter Units & Chromatography Steps Investigated in Small Scale Spiking Study.**

| **At Scale Filter** | **Filter Area At-scale [cm²]** | **Material** | **Pore size** | **Small Scale Model** | **Filter Area Small Scale [cm²]** | **Scale Down Factor [-]** | **Loading Density [mL/cm²]** |
|---|---|---|---|---|---|---|---|
| Filter 3: Durapore KVGL Sterile Filter | 6900 | PVDF | 0.2 µm | Durapore® 0.22 µm Optiscale® 25mm NB | 3.5 | 1971 | 72.46 |
| Filter 6 and 8: Kleenpak Capsules | 3300 | Hydrophilic modified PVDF | 0.2 µm | Mini Kleenpak KM5DFLP2S | 20 | 165 | 8.1 |

In this example the biotechnological process comprised two bioreactors that were harvested independent of each other, depth and sterile filtered in filtration series 1, purified in a capture step, low pH virus inactivated (VIA) and pooled into the same bag during filtration series 2. Filtration series 1 consisted of three filtration steps where the third filtration step only consisted of one filter here a Durapore KVGL Sterile Filter (cf. Table 2) i.e. a polyvinylidene fluoride based filter membrane, whereas filter steps 1 and 2 employed cellulose fiber based filters. Filtration series two consisted of 5 filtration steps, where the 6^{th} and the 8^{th} overall filtration step - i.e. the 3^{rd} and 5^{th} steps of filtration series two - consisted of a Kleenpak Capsule i.e. a polyvinylidene fluoride based filter membrane. In other words, the Kleenpak Capsule was used multiple times in the process. As specific in Table 3 below overall filter steps 4, 5 and 7 - i.e. filter steps 1, 2 and 4 of filtrationtation series two - employed PES based or cellulose based filters. An overview of the filtration steps and used filters is given in Table 3 below. All filters used in this example were smaller than the filters used at production scale. However, all filters were chosen in such a fashion that they represent the respective filters used at production scale. Moreover, the filters were loaded with linearly down scaled flow rates and product loading per cm² filter area, corresponding to the at-scale loading densities. Hence the results as discussed below can be extrapolated to the filters of the production process.

**Table 3 Filters, matrices and unit operations as used in the example**

| Filtration series | Unit Operation | Small scale model | Filter area | Loading density [mL/cm²] or [g/L ᵣₑₛᵢₙ] | Pore Size at scale | Matrix |
|---|---|---|---|---|---|---|
| 1 | Filter 1 (=Filtration step 1 of series 1) | Depth Filter with Cellulose fibers & inorganic filter aid; applied load 2.1L | 23 | 90.9 | 0.6-8µm | Clarified Culture Supernatant |
| 1 | Filter 2 (=Filtration step 2 of series 1) | Depth Filter with Cellulose fibers & inorganic filter aid; applied load 2.1L | 23 | 90.9 | 0-0.7µm | Clarified Culture Supernatant |
| 1 | Filter 3 (=Filtration step 3 of series 1) | Durapore® 0.22 µm Optiscale® 25mm NB, applied load 0.25L | 3.5 | 72.46 | 0.2µm | Clarified Culture Supernatant |
| Capture Step | | | | 30 | | |
| 2 | Filter 4 (Filtration step 1 of series 2) | CA custom filter applied load 0.11L | 20 | 5.7 | 0.3µm/0.8µm | Na-Acetat, TRIS pH adjusted |
| 2 | Filter 5 (Filtration step 2 of series 2) | PES custom filter applied load 0.09L | 20 | 4.5 | 0.45µm/0.8µm | Na-Acetat, TRIS pH adjusted |
| 2 | Filter 6 (Filtration step 3 of series 2) | Mini Kleenpak KM5DFLP2S, applied load 0.16L | 20 | 8.1 | 0.2µm | Na-Acetat, TRIS pH adjusted |
| 2 | Filter 7 (Filtration step 3 of series 2) | PES custom filter applied load 0.09L | 20 | 4.5 | 0.2µm/0.45µm | Na-Acetat, TRIS pH adjusted |
| 2 | Filter 8 (Filtration step 5 of series 2) | Mini Kleenpak KM5DFLP2S, applied load 0.16L | 20 | 8.1 | 0.2µm | Na-Acetat, TRIS pH adjusted |

In correspondence to what is described above the maximum tolerable dose of simethicone per day was assumed to be 0.1 % of the maximum applied patient dose of 150mg thus the threshold for the identification is, i.e. 0.15 mg/day. The maximum allowed antifoam input for the exemplary process at production scale was 73.5 mg simethicone/L culture medium per day. Thus in order to meet the requirements as shown in Table 1 a 2 -log step reduction of simethicone had to be demonstrated to reach a value of below 5.5 mg/L or 1.2 mg/L simethicone capacity of the respective filter membrane 3 or 6&8 (cf. Table 2).

FoamAway was spiked at doses of 1.2 - 120 mg/L simethicone () in front of each filter into the respective standard matrices, i.e. the components present at the respective process step at scale. In detail for Filter 3 standard matrix was clarified culture supernatant, for Filter 8 the standard matrix was Na-Acetat, TRIS pH adjusted. As shown in the Figure a sample was taken after spiking of the respective matrix prior to filtering (sample 2, Figure), another sample was taken after filtering (sample 3, Figure). Moreover, a sample of the respective matrix was used as baseline value (sample 1, Figure).

**Table 4. Theoretical Versus Actual Simethicone Study Spiking Levels used for Calculations.**

| **Parameter** | | **High Spike Level** | | **Medium Spike Level** | | **Low Spike Level** | |
|---|---|---|---|---|---|---|---|
| | UoM | Silicone | Simethicone ^{a} | Silicone | Simethicone ^{a} | Silicone | Simethicone ^{a} |
| Simethicone Spike | mg/L | 45.45 | 120.00 | 9.09 | 24.00 | 0.91 | 2.40 |
| | | | | | | or | or |
| | | | | | | 0.45 | 1.20 |

| | | | | | | | |
|---|---|---|---|---|---|---|---|
| Antifoam FoamAway™ main ingredient (3% w/w) is simethicone which was detected by total silicone analysis with inductively coupled plasma-optical emission spectrometry (ICP-OES). It was assumed that the silicone share is 37.87%. Therefore one mg/L quantified silicone represents 2.64 mg/L simethicone under the assumption of no other silicone source in the sample. | | | | | | | |

The process for Filter 3 was run at a standard flow rate of 0.00145 L/min/cm² membrane area which corresponds the maximum pumped volume/ min and filter area used at manufacturing scale through the above described filter arrangement. For example, for Filter 3 which has a membrane area of 6900 cm² at manufacturing scale this corresponds to a flow rate of 10 L/min at manufacturing scale.

For Filter 3 the pressure was at 0.02 - 0.06 bar as monitored using a pendotech single use pressure gauge with unspiked material; when a spike with 5.5 mg/L simethicone was performed (4.3 mg/L in matrix + 1.2mg/L spike) the filter blocked at the same flowrate after 34-37ml/cm² were applied and the pressure limit of 4 bar was reached as monitored using the pendotech single use pressure gauge. It was found that filter 3 blocked at 5.5 mg/L. Similarly for filter 8 the standard flow rate was 0.0007 L/min/cm² membrane area and the pressure was at 1,2 - 1,4 bar as monitored using a pendotech single use pressure gauge with unspiked material. When a spike with 1,2 mg/L simethicone was applied the filter blocked at the maximum filter pressure of 1,4 bar as monitored using a pendotech single use pressure gauge. Thus, under process conditions where the filters do not block, the simethicone and hence antifoam level has to be even lower than the low used simethicone spikes (cf. Table 4). Dependent on the product concentration and initial simethicone concentration in the production bioreactor and provided that the filters do not block, the simethicone and hence antifoam level are lower than the ICHQ3C(R2) identification threshold.

In parallel process performance qualification runs were sampled and analyzed for total silicone to demonstrate antifoam reduction at scale in an exemplary downstream process (data not shown).

Overall the used filtration series achieved a combined reduction of simethicone of at least 6.09 log steps i.e. such an exemplary arrangement can be used on production scale for simethicone depletion meeting the ICHQ3C requirement and this sufficient depletion can be monitored with the method described herein via detecting whether at least the third and/or eight filter membrane which both have a pore size of between 0.1 and 0.3µm blocks.

## Claims

1. Method for determining whether the simethicone level in a biotechnological process is depleted below a desired simethicone level comprising the following steps:
- providing a product stream
- passing said product stream through at least one filter membrane with a pore size of between 0,1 µm and 0,3 µm
- detecting whether the at least one filter membrane blocks via monitoring whether a pressure required to keep the process stream moving increases or decreases and/or via monitoring whether the flow rate passing said product stream through the at least one filter membrane declines to 0 mL/min
**characterized in that** the at least one filter membrane blocks if the level of simethicone is above a certain threshold wherein said threshold is below the desired simethicone level.

2. Method according to claim 1 wherein the monitoring is carried out using at least one pressure sensor in front of the at least one filter membrane and/or at least one pressure sensor located behind the at least one filter membrane.

3. Method according to claim 1 wherein the monitoring is carried out via a process control system which detects a deviation in the pressure required to keep said process stream moving via analyzing data generated by at least one pressure sensor in from of the at least one filter membrane and/or at least one pressure sensor located behind the at least one filter membrane.

4. Method according to claim 1 wherein the monitoring is carried out using at least one flow sensor located before and/or behind the at least one filter membrane.

5. Method according to claim 1 wherein the monitoring is carried out via a process control system which detects a deviation in the flow rate with which the product stream passes the at least one filter membrane via analyzing data generated by at least one flow sensor located before and/or behind the at least one filter membrane.

6. Method according to claim 1, wherein the monitoring is carried out using at least one pressure sensor located before and/or behind the at least one filter membrane and at least one flow sensor located before and/or behind the at least one filter membrane.

7. Method according to claim 1, wherein the at least one filter membrane blocks at a simethicone level of between 1.2 mg/L - 5.5 mg/L and thus indicates that the simethicone level may be too high.

8. Method according to claim 1, wherein the at least one filter membrane has a pore size of 0.2 µm - 0.22µm

9. Method according to claim 1, wherein the at least one filter membrane is a polyvinylidene fluoride based filter membrane.

10. Method according to claim 1, wherein the simethicone is comprised in an antifoam agent.

11. Method according to claim 1, wherein the simethicone is depleted in a biotechnological process comprising at least one bind-and-elute step, such as a Protein A chromatography, including a sterile filtration, i.e. employing a filter with a pore size of 0.2 µm - 0.22 µm.

12. Use of the method according to claim 1, wherein a product stream comprising simethicone and a biotechnological product is passed through the filter membrane.
